# FASCICULE DE BREVET EUROPEEN

(11) **EP 2 037 082 B1**
(45) Date de publication et mention de la délivrance du brevet: **24.02.2016**
(21) Numéro de dépôt: 08164270.4
(22) Date de dépôt: 12.09.2008
(51) Int. Cl.: F01D 5/14, F04D 29/32, F01D 5/16, F01D 5/28

(54) **Aube en matériau composite avec une disposition d'amortissement**
Laufschaufel aus Verbundwerkstoff mit Dämpfungseinrichtung
Composite blade with damping arrangement

(30) Priorité: 13.09.2007 FR 0706430
(43) Date de publication de la demande: 18.03.2009
(73) Titulaire: SNECMA, 75015 Paris (FR)
(72) Inventeur: Le Hong, Son, 77810 Thomery (FR); Lombard, Jean-Pierre, François, 77830 Pamfou (FR)
(74) Mandataire: Gevers & Orès

(56) Documents cités:
- EP-A- 0 496 550
- EP-A- 1 908 919
- WO-A-99/43955
- DE-A1- 4 443 440
- GB-A- 2 391 270
- US-A- 3 357 850
- US-A- 4 097 193
- US-A- 4 895 491

## Description

La présente invention concerne le domaine des turbomachines ; elle se rapporte à l'amortissement d'une aube réalisée en matériau composite et vise plus particulièrement l'amortissement des aubes de soufflante dans un turboréacteur.

Les aubes, notamment de soufflante mais aussi de compresseur basse pression, en matériau composite, avec fibres de carbone, sont réalisées de différentes façons. Selon un mode de fabrication on confectionne un empilement de plis unidirectionnels ou tissés préimprégnés que l'on place dans un moule en orientant différemment les plis successifs avant compactage et polymérisation à l'autoclave. Selon une autre méthode on prépare des préformes tissées de fibres sèches que l'on assemble par couture ou bien une seule préforme en fils ou fibres tissé(e)s en trois dimensions, que l'on imprègne de résine par injection dans un moule fermé. L'aube est formée d'une seule pièce comprenant le pied avec la pale. Elle comprend différentes protections pour en renforcer la résistance thermomécanique. Ainsi on fixe une protection métallique sur le bord d'attaque ou sur l'ensemble du contour de la pale comprenant le bord d'attaque, la tête d'aube et le bord de fuite, par exemple sous la forme d'une pièce en titane collée sur toute la surface du bord d'attaque et sur une portion avant des surfaces extérieures de la paroi d'extrados et de la paroi d'intrados. Egalement, on renforce la face extérieure de la paroi d'intrados par montage d'un film de protection pouvant être réalisé en matériau synthétique, polyuréthane par exemple, et directement collé sur la pièce intermédiaire.

L'invention vise ce type d'aube avec au moins une protection le long du bord d'attaque. Un exemple de fabrication est décrit dans le brevet EP 1.777.063 au nom du présent déposant.

Le flottement est un phénomène de couplage entre l'aérodynamique et les caractéristiques élastiques de l'aube créant des situations instables. Le flottement se manifeste de manière asynchrone. On distingue les flottements subsoniques des flottements supersoniques. L'aube de soufflante est principalement concernée par le flottement subsonique.

Le flottement est un phénomène difficile à prédire, en raison de la complexité du couplage entre les réponses aérodynamiques et mécaniques. Par ailleurs, l'amortissement mécanique de l'aube est généralement assez mal connu. Enfin, dans la conception actuelle d'aubages de plus en plus chargés, le flottement est un phénomène à prendre en compte particulièrement.

Lors de la conception de l'aube de soufflante, on estime une marge de flottement, qui mesure, à un débit donné, l'écart entre la ligne de flottement et la ligne de fonctionnement. Cette valeur est généralement établie à partir d'une référence connue (la plus proche) en y ajoutant les écarts calculés entre cette configuration de référence et la nouvelle configuration. Les critères utilisés aujourd'hui pour le flottement subsonique sur les modes à 1F, 1T et mode couplés zéro diamètre sont :
- le Twist Bend coupling (TBC), représentant le rapport entre les déplacements du mode de torsion et du mode de flexion. Plus le paramètre TBC est élevé, plus le risque de flottement l'est également.
- La vitesse réduite ou critère de Strouhal donnée par la formule suivante : VR=W/C∗f∗pi, où W est la vitesse relative, C la corde de l'aube à une hauteur donnée et f la fréquence du mode d'aube considéré. Ce critère représente la cohérence entre la fréquence de vibration de l'aubage et la fréquence de l'instationnarité de l'écoulement le long de cet aubage.

D'autres facteurs peuvent influer sur la marge de flottement et peuvent parfois être utilisés lorsque le phénomène est rencontré lors des essais : réduction du débit spécifique, réduction du nombre d'aubes ou augmentation de la corde, lubrification du pied d'aubes, detuning.

L'invention a pour but d'améliorer la réponse harmonique de l'aube à des excitations aérodynamiques asynchrones de type flottement telles que décrites ci-avant en augmentant substantiellement l'amortissement mécanique de l'aube.

L'invention a également pour but d'améliorer la réponse harmonique de l'aube à des excitations aérodynamiques synchrones telles que :
Les distorsions de manche d'entrée générées par des conditions de vol en incidence - montées, descentes, vent de travers.
Les excitations harmoniques générées par un balourd résiduel,
Les fluctuations de pression par remontée vers l'amont induites par une roue fixe de type redresseur sur une roue fan.
Les sillages ou fluctuations de pression par remontée vers l'amont induites par une roue mobile fan sur sa voisine dans le cas d'une architecture à deux rotors contrarotatifs.

Une technologie d'amortissement a été étudiée depuis plusieurs années par le présent déposant avec une première évaluation sur les disques aubagés monoblocs. Ces derniers termes désignent un ensemble, disque et aubes, fabriqué d'une seule pièce. Le principe de fonctionnement du système d'amortissement repose sur la dissipation d'énergie par cisaillement d'un matériau viscoélastique convenablement disposé. Le bon comportement du système amortissant est dépendant des dimensions du matériau et de la bonne adhérence entre le matériau et la pièce du moteur.

On connaît le document EP 496 550 qui décrit une aube fan de moteur aéronautique, tel qu'un turboréacteur, constituée d'une structure stratifiée renforcée sur son bord d'attaque par une lame métallique. La structure est formée d'une alternance de couches métalliques fines et en élastomère. Les couches en élastomère remplissent la fonction d'absorption d'énergie et il est précisé que les feuilles métalliques 28 forment les couches de surface de la pale. On ne retrouve pas cependant une aube en matériau composite avec un corps formé de filaments imprégnés protégé seulement sur le bord d'attaque par une protection métallique.

Le document US4097193 décrit des moyens d'amortissement des vibrations naturelles sur une pale de rotor d'hélicoptère. On retrouve des amortisseurs disposés le long de la pale et en particulier un amortisseur sur le bord de fuite près du moyeu aucune protection n"st envisagée sur le bord d'attaque de la pale.

GB2391270 décrit un moyen d'amortissement pour une pale de turbomachine creuse telle qu'une aube de compresseur ou bien de soufflante. Une couche d'amortissement des vibrations est appliquée sur la face interne de la pale. Cette couche ne remplit pas la fonction de protection du bord d'attaque.

On connaît également le brevet US 6.471.484 qui décrit un système d'amortissement des vibrations dans un rotor de moteur à turbine à gaz comprenant un disque aubagé monobloc. Les pales des aubes sont pourvues d'une cavité creusée dans une face intrados ou extrados et contenant une couche d'un matériau d'amortissement avec une couche de contrainte. Une feuille de couverture recouvre la cavité. En fonctionnement l'amortissement des vibrations est favorisé par les contraintes de cisaillement induites dans le matériau d'amortissement entre la pale et la couche de contrainte d'une part et dans le matériau d'amortissement situé entre la couche de contrainte et la feuille de couverture d'autre part.

La présente invention vise un perfectionnement de cette technique dans une application à une aube en matériau composite avec moyen de protection de son bord d'attaque.

Conformément à l'invention, l'aube en matériau composite, comprenant une pale formée de filaments ou de fibres imprégnés d'une résine thermodurcissable avec un élément de protection dans la région du bord d'attaque de la pale comprenant une partie en forme de lame rigide, ladite lame étant solidaire de la pale, est caractérisée par le fait qu'au moins une couche d'un matériau viscoélastique est interposée au moins en partie entre ladite plaque rigide et la pale de manière à former avec l'élément de protection un moyen d'amortissement des vibrations sur la pale.

Le matériau viscoélastique est de préférence compris dans les matériaux suivants : caoutchouc, silicone, polymère élastomère, pour les basses températures vues sur la soufflante ou résine époxy.

L'invention consiste donc à utiliser un matériau viscoélastique pour une aube telle qu'une aube fan en matériau composite tissé de type RTM. Cette couche est située entre le bord d'attaque en titane et la pale en composite tissé, à la place, partiellement ou totalement, de la couche de colle actuellement employée.

On introduit une fonction d'amortissement mécanique dans l'aube de turbomachine telle qu'une aube de soufflante en composite RTM. Cette fonction est également bénéfique dans le cas de chargements accidentels tels que l'ingestion d'oiseau (ou la perte d'aube) par la dissipation des énergies d'impact. Dans ce dernier cas, on affecte donc une double fonction d'amortissement en réponse vibratoire et ingestion d'oiseaux.

En utilisant le bord d'attaque revêtu d'une protection notamment en titane comme contre couche pour le système amortissant, il n'y a pas d'introduction de pièce supplémentaire.

Ainsi la solution de l'invention combine plusieurs avantage :
Une bonne intégration de l'aube composite.
Par l'utilisation des bords d'attaque en métal comme contre couche, le surcoût de cette fonction d'amortissement est limité.
On associe les fonctions d'amortissement en cas d'ingestion et de flottement.
On dispose de leviers d'action pour les dimensionnements, positionnement et taille des zones amortissantes.

L'espace ménagé entre le matériau composite et le bord d'attaque est adapté à l'épaisseur nécessaire de matériau viscoélastique. Ainsi la couche de matériau viscoélastique est par exemple contenue au moins partiellement dans une cavité ménagée dans le matériau composite ou bien est contenue au moins partiellement dans une cavité ménagée dans l'élément de protection.

Les fonctions de cette couche de matériau viscoélastique sont :
D'introduire un amortissement mécanique pour les réponses vibratoires de l'aube, en particulier dans le cas d'une aube de soufflante pour les modes de flexion 1F et de torsion 1T.
De jouer un rôle d'amortissement lors des phénomènes tels que lors d'ingestion d'oiseaux, en absorbant une fraction de l'énergie d'impact et en limitant ainsi l'endommagement de l'aube.

Ainsi selon l'amortissement envisagé, la couche de matériau viscoélastique s'étend sous la lame sur une partie de sa surface, plus particulièrement la couche de matériau viscoélastique s'étend sur une zone correspondant à une zone de déformation maximale pour un mode de vibration déterminé de l'aube. Le cas échéant la couche de matériau viscoélastique s'étend sur une zone s'étendant parallèlement au bord d'attaque de la pale et est susceptible de recouvrir tout le bord d'attaque.

Le matériau amortissant peut être monocouche ou multicouche en fonction de l'environnement, des matériaux utilisés et des caractéristiques d'amortissement recherché.

Selon un mode de réalisation particulier, l'élément de protection du bord d'attaque est en forme de "V" comprenant une partie pleine centrale et deux lames disposées de part et d'autre. La partie pleine de l'élément de protection recouvre le bord d'attaque, et les lames recouvrent en partie les deux faces intrados et extrados du bord d'attaque.

L'élément de protection du bord d'attaque est formé avantageusement d'un clinquant métallique, notamment en titane.

Selon un mode de réalisation, une plaque rigide supplémentaire est interposée entre ladite lame et la pale avec deux couches de matériau viscoélastique, de part et d'autre de la plaque. Les couches de matériau viscoélastique, de part et d'autre de la plaque peuvent être différentes.

La couche de matériau viscoélastique a par exemple été rendue solidaire de la lame et/ou de la pale par adhérisation à chaud d'un film de matériau viscoélastique, par exemple un matériau élastomère vulcanisé ou encore la couche de matériau viscoélastique a été rendue solidaire de la lame et/ou de la pale par collage au moyen d'un matériau adhésif, de préférence ce dernier a une raideur supérieure à celle du matériau viscoélastique.

L'invention s'applique aux compresseurs de moteur à turbine à gaz et de préférence aux soufflantes de turboréacteur, éventuellement de type non caréné, dont la température en fonctionnement du moteur est compatible avec celle du matériau viscoélastique.

On décrit maintenant un mode de réalisation non limitatif de l'invention, plus en détail, en référence aux dessins annexés sur lesquels
La figure 1 représente schématiquement un turboréacteur avec soufflante avant.
La figure 2 montre une aube de soufflante en matériau composite avec élément de protection du bord d'attaque, et présente les zones comportant un amortisseur viscoélastique
La figure 3 montre dans une vue de dessus de la figure 2 la région du bord d'attaque de l'aube.
La figure 4 montre une coupe selon IV-IV d'une premier mode de réalisation de l'agencement du matériau viscoélastique.
La figure 5 montre un autre agencement de la couche de matériau viscoélastique.
La figure 6 montre un autre agencement de la couche de matériau viscoélastique.
La figure 7 montre une autre disposition du moyen d'amortissement

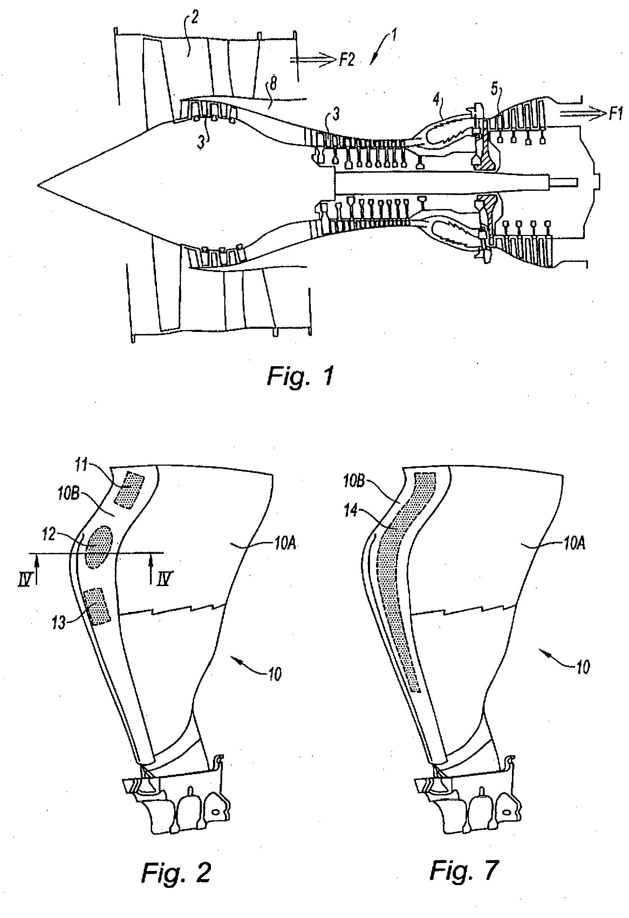

En se référant à la figure 1, on a représenté de manière schématique un exemple de turbomachine sous la forme d'un turboréacteur 1 à double flux et à double corps. Une soufflante 2 à l'avant alimente le moteur en air. L'air comprimé par la soufflante est partagé en deux flux concentriques F1 et F2. Le flux secondaire F2 est évacué directement dans l'atmosphère et fournit une part essentielle de la poussée motrice. Le flux primaire F1 est guidé à travers plusieurs étages de compression 3 vers la chambre de combustion 4 où il est mélangé au carburant et brûlé. Les gaz chauds alimentent les différents étages de turbine 5 qui entraînent la soufflante 2 et les rotors de compression 3. Les gaz sont ensuite évacués dans l'atmosphère.

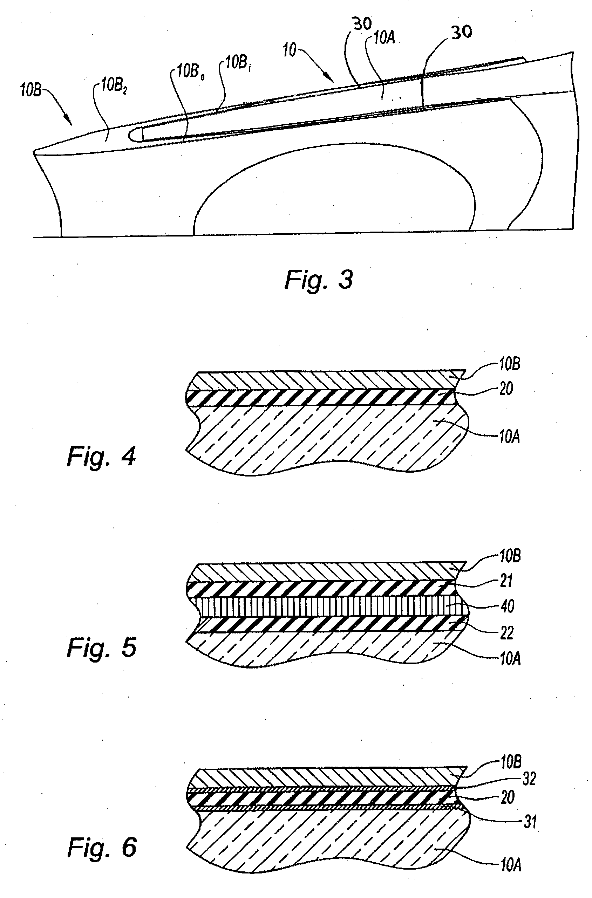

Les figures 2 et 3 montrent une aube 10 de soufflante susceptible d'être utilisée sur ce type de moteur. Il s'agit d'une aube réalisée en matériau composite. D'une façon générale la partie 10A en matériau composite de l'aube est constituée de fibres ou filaments liés entre eux par une résine thermodurcissable. Les filaments ou fibres sont en carbone ou autre matériau tel que le verre, la silice, le carbure de silicium, l'alumine, l'aramide ou un polyamide aromatique. Le bord d'attaque est revêtu d'un moyen de protection métallique 10B. Il s'agit ici d'un clinquant en titane collé par la couche 30, sur le matériau composite s'étendant le long du bord d'attaque, avec une lame formant une aile de chaque côté : une aile 10Bi sur la paroi d'intrados en aval du bord d'attaque et une aile 10Be sur la paroi d'extrados en aval du bord d'attaque. Les deux ailes sont réunies le long du bord d'attaque par une partie plus épaisse 10B2. Une telle aube est fabriquée par exemple selon la technique décrite dans le brevet EP 1.777.063 au nom du présent demandeur.

Selon cette technique, on confectionne une préforme par tissage en trois dimensions de filaments. La préforme tissée d'une seule pièce est ensuite détourée par découpage du contour d'après une abaque tridimensionnelle. On place la pièce dans un moule de conformation. Puis après déformation appropriée on dispose la pièce dans un moule de compactage qui rigidifie la préforme déformée. On réalise un surcompactage du bord d'attaque de façon à permettre le placement de l'élément de protection le long du bord d'attaque. Il s'agit d'un élément en forme de demi manchon longitudinal avec deux ailes destinées à recouvrir une portion des parois d'extrados et d'intrados en aval du bord d'attaque. Comme cela est expliqué dans le brevet cité ci-dessus, on dispose l'élément de protection dans un dispositif de montage apte à écarter les ailes. On place l'élément de protection par son bord d'attaque préalablement enduit de colle, entre les deux ailes puis on relâche celles-ci.

L'ensemble est disposé dans un moule d'injection dans lequel on injecte un liant comprenant une résine thermodurcissable de façon à imprégner toute la préforme. On chauffe enfin le moule.

Conformément à l'invention, on incorpore entre la pale 10A et l'élément de protection 10B, au moins une couche 20 d'un matériau viscoélastique. L'élément de protection métallique 10B forme une contre couche rigide pour le système amortisseur de vibrations qu'il constitue avec la couche de matière viscoélastique.

La viscoélasticité est une propriété d'un solide ou d'un liquide qui lorsqu'il est déformé montre un comportement à la fois visqueux et élastique par une dissipation et un stockage simultanés d'énergie mécanique.

Un matériau rigide dans le système amortisseur de vibrations est plus rigide que le matériau viscoélastique de la couche. Autrement dit les caractéristiques, isotropes ou anisotropes, d'élasticité du matériau de la contre couche sont supérieures à celles, isotropes ou anisotropes du matériau viscoélastique dans la plage de fonctionnement thermique et fréquentielle souhaitée. A titre d'exemple non limitatif, le matériau de la contre couche est métallique, et le matériau de la couche viscoélastique de type caoutchouc, silicone, polymère élastomère, résine époxy.

Sur la figure 2, on a représenté trois moyens amortisseurs différents 11, 12, et 13 sur trois zones différentes incorporant au moins une couche 20 de matériau viscoélastique sous l'élément 10B de protection du bord d'attaque.

On voit sur la figure 4, en coupe selon la direction IV - IV de la figure 2, la disposition de la couche viscoélastique 20 entre le clinquant de l'élément de protection 10B et le matériau composite de la pale 10A. Le moyen amortisseur 11, 12 ou 13 est placé dans les zones où de préférence l'amplitude des déformations dynamiques est maximale, ici dans la partie de la pale située à distance éloignée du pied de l'aube. Ce moyen peut avoir différentes formes, ovale ou polygonale, dimensions et dispositions selon l'amortissement recherché.

On fait adhérer le matériau viscoélastique à la pale par adhérisation à chaud ou bien par interposition d'une couche de colle 31 respectivement 32 comme cela est représenté sur la figure 6. Dans une variante, la couche de contrainte que forme le clinquant n'adhère pas à la couche viscoélastique ; il est mis en appui en étant lié par ailleurs au matériau composite de la pale.

Il est à noter que, dans les zones en dehors des moyens amortisseurs, l'épaisseur de la couche viscoélastique est compensée par l'épaisseur de la couche de colle 30 reliant le clinquant au matériau composite.

Selon une variante non représentée une cavité formant logement est usinée pour l'amortisseur, dans le clinquant, dans le matériau composite ou dans les deux.

La figure 5 montre une autre variante de réalisation de l'amortisseur selon l'invention. Il est constitué dans ce cas d'une feuille de contrainte supplémentaire 40, sous la forme par exemple d'une feuille métallique. Une couche de matériau viscoélastique 21 est interposée entre le clinquant de l'élément de protection 10B et la feuille métallique 40. Une couche de matériau viscoélastique 22, le même que 21 ou différent, est interposée entre la feuille de contrainte 40 et la surface de la pale 10A. Dans ce mode de réalisation, encore, la liaison entre les couches peut être obtenue par collage ou adhérisation à chaud selon les matériaux choisis ;

La figure 7 montre une variante 14 de disposition du système amortisseur, la couche viscoélastique s'étend sur une partie qui est allongée le long du bord d'attaque de la pale 10A.

## Revendications

1. Aube en matériau composite de compresseur de moteur à turbine à gaz ou de soufflante de turboréacteur à soufflante, comprenant une pale (10A) formée de filaments tissés imprégnés d'une résine thermodurcissable avec un élément de protection (10B) dans la région du bord d'attaque de la pale comprenant une partie en forme de lame rigide (10Bi, 10Be), ladite lame étant solidaire de la pale, **caractérisée par le fait qu'**au moins une couche d'un matériau viscoélastique (20, 21,22) est interposée au moins en partie entre ladite lame rigide (10Bi, 10Be) et la pale (10A) de manière à former avec l'élément de protection (10B) un moyen (11, 12, 13, 14) d'amortissement des vibrations sur la pale.

2. Aube selon la revendication précédente dont la couche (20, 21, 22) de matériau viscoélastique est contenue au moins partiellement dans une cavité ménagée dans le matériau composite.

3. Aube selon les revendications 1 ou 2 dont la couche de matériau viscoélastique (20, 21, 22) est contenue au moins partiellement dans une cavité ménagée dans l'élément de protection (10B).

4. Aube selon l'une des revendications précédentes dont la couche de matériau viscoélastique s'étend sous la lame sur une partie de sa surface.

5. Aube selon la revendication précédente dont la couche de matériau viscoélastique s'étend sur une zone correspondant à une zone de déformation maximale pour un mode de vibration déterminé de l'aube pour former un moyen (11, 12, 13, 14) d'amortissement des vibrations.

6. Aube selon la revendication 1 dont la couche de matériau viscoélastique forme un moyen amortisseur (14) sur une zone s'étendant parallèlement au bord d'attaque de la pale.

7. Aube en matériau composite selon l'une des revendications précédentes, dont l'élément de protection (10B) du bord d'attaque comprend deux lames rigides (10Bi, 10Be) avec une arête commune (10B2), l'élément de protection recouvrant le bord d'attaque et en partie les deux faces intrados et extrados adjacentes du bord d'attaque.

8. Aube selon l'une des revendications précédentes, dont le matériau viscoélastique est choisi dans les matériaux suivants : caoutchouc, silicone, polymère élastomère ou résine époxy

9. Aube, selon l'une des revendications précédentes, dont l'élément de protection du bord d'attaque est formé d'un clinquant métallique.

10. Aube selon l'une des revendications précédentes dont une plaque rigide supplémentaire (40) est interposée entre ladite lame (10B) et la pale (10A) avec deux couches (21, 22) de matériau viscoélastique disposés de part et d'autre de la plaque.

11. Aube selon la revendication précédente dont les couches de matériau viscoélastique disposé de part et d'autre de la plaque sont différentes.

12. Aube selon l'une des revendications précédentes dont la couche de matériau viscoélastique a été rendue solidaire de la lame et/ou de la pale par adhérisation à chaud d'un film de matériau viscoélastique.

13. Aube selon l'une des revendications 1 à 11 dont la couche de matériau viscoélastique a été rendue solidaire de la lame et/ou de la pale par collage au moyen d'un matériau adhésif.

14. Compresseur de moteur à turbine à gaz comportant au moins une aube selon l'une des revendications précédentes.

15. Turboréacteur comportant une soufflante avec au moins une aube selon l'une des revendications 1 à 13.

16. Turboréacteur selon la revendication 15 dont ladite soufflante est du type non caréné.

## Patentansprüche

1. Schaufel aus einem Kompositwerkstoff für einen Kompressor eines Gasturbinenmotors oder eines Gebläses einer Turbostrahlturbine mit einem Blatt (10A), das aus gewebten, imprägnierten Fasern eines hitzehärtbaren Harzes mit einem Schutzelement (10B) in einem Bereich der Angriffskante des Blatts ausgebildet ist, das einen Teil in Form einer steifen Klinge (10Bi, 10Be) aufweist, wobei die Klinge einstückig mit dem Blatt ausgebildet ist, **dadurch gekennzeichnet, dass** zumindest eine Schicht aus einem viskoelastischen Werkstoff (20, 21, 22) zumindest teilweise zwischen der steifen Klinge (10Bi, 10Be) und der Schaufel (10A) so liegt, dass sie mit dem Schutzelement (10B) ein Mittel (11, 12, 13, 14) zur Dämpfung von Schwingungen auf das Blatt bildet.

2. Schaufel nach dem vorhergehenden Anspruch, wobei die Schicht (20, 21, 22) aus viskoelastischen Werkstoff zumindest teilweise in einen Hohlraum fortgesetzt ist, der in dem Kompositwerkstoff ausgebildet ist.

3. Schaufel nach Anspruch 1 oder 2, wobei die Schicht aus viskoelastischem Werkstoff (20, 21, 22) zumindest teilweise in einen Hohlraum fortgesetzt ist, der in dem Schutzelement (10B) ausgebildet ist.

4. Schaufel nach einem der vorhergehenden Ansprüche, wobei die Schicht aus dem viskoelastischen Werkstoff sich unter der Klinge über einen Teil der Oberfläche erstreckt.

5. Schaufel nach dem vorhergehenden Anspruch, wobei die Schicht aus viskoelastischem Werkstoff sich über einen Zone erstreckt, die einer Zone der maximalen Verformung für einen Schwingungsmodus entspricht, der von der Schaufel bestimmt ist, um eine Mittel (11, 12, 13, 14) zur Dämpfung von Schwingungen zu bilden.

6. Schaufel nach Anspruch 1, wobei die Schicht aus einem viskoelstischen Werkstoff ein Dämpfungsmittel (14) über einer Zone bildet, die sich parallel an der Angriffskante der Schaufel erstreckt.

7. Schaufel aus Verbundwerkstoff nach einem der vorhergehenden Ansprüche, wobei das Schutzelement (10B) der Angriffskante zwei steife Klingen (10Bi, 10Be) mit einer gemeinsamen Kante (10B2) umfasst, wobei das Schutzelement die Angriffskante und einen Teil der zwei nach innen und außen gewölbten Flächen bedeckt, die neben der Angriffskante liegen.

8. Schaufel nach einem der vorhergehenden Ansprüche, wobei der viskoelastische Werkstoff aus den folgenden Werkstoffen ausgewählt ist: Kautschuk, Silikon, elastomerisches Polymer, Epoxydharz.

9. Schaufel nach einem der vorhergehenden Ansprüche, wobei das Schutzelement der Angriffskante aus einem Metallfilm gebildet ist.

10. Schaufel nach einem der vorhergehenden Ansprüche, wobei eine steife zusätzliche Platte (40) zwischen der Klinge (10B) und dem Blatt (10A) mit zwei Schichten (21, 22) aus viskoelastischem Werkstoff liegt, die auf beiden Seiten der Platte angeordnet sind.

11. Schaufel nach dem vorhergehenden Anspruch, wobei die Schichten aus viskoelastischem Werkstoff, die auf beiden Seiten der Platte angeordnet sind, unterschiedlich sind.

12. Schaufel nach einem der vorhergehenden Ansprüche, wobei die Schicht aus viskoelastischem Werkstoff einstückig mit der Klinge und / oder der Schaufel durch Heißkleben mit einem Film aus viskoelastischem Werkstoff ausgebildet ist.

13. Schaufel nach einem der Ansprüche 1 bis 11, wobei die Schicht aus einem viskoelastischem Werkstoff einstückig mit der Klinge und / oder der Schaufel durch Kleben mittels eines Klebstoffs ausgebildet ist.

14. Kompressor für einen Gasturbinenmotor mit zumindest einer Schaufel nach einem der vorhergehenden Ansprüche.

15. Turbostrahlturbine mit einem Gebläse mit zumindest einer Schaufel nach einem der Ansprüche 1 bis 13.

16. Turbostrahlturbine nach Anspruch 15, wobei das Gebläse vom nicht verkleideten Typ ist.

## Claims

1. A blade made of composite of a gas turbine compressor or of a fan of a fan turbojet engine, comprising a vane (10A) formed of woven filaments impregnated with a thermosetting resin with a protective element (10B) in the region of the leading edge of the vane comprising a part, in the form of a rigid strip (10Bi, 10Be), said strip being secured to the vane, wherein at least one layer of a viscoelastic material (20, 21, 22) is at least partially interposed between said rigid strip (10Bi, 10Be) and the vane (10A) so as to form, with the protective element (10B), a means (11, 12, 13, 14) of damping the vibrations of the vane.

2. The blade as claimed in the preceding claim in which the layer (20, 21, 22) of viscoelastic material is at least partially contained in a cavity formed in the composite.

3. The blade as claimed in claim 1 in which the layer of viscoelastic material (20, 21, 22) is at least partially contained in a cavity formed in the protective element (10B).

4. The blade as claimed in claim 1 in which the layer of viscoelastic material extends under the strip over part of its surface (10B).

5. The blade as claimed in claim 4 in which the layer of viscoelastic material extends over a zone corresponding to a zone of maximum deformation for a determined vibration mode of the blade in order to form a vibration damping means (11, 12, 13, 14).

6. The blade as claimed in claim 1 in which the layer of viscoelastic material forms a damping means (14) over a zone running parallel to the leading edge of the vane.

7. The blade made of composite as claimed in claim 1 in which the protective element (10B) that protects the leading edge comprises two rigid strips (10Bi, 10Be) with a common edge (10B2), the protective element covering the leading edge and partially covering the two, intrados and extrados, faces adjacent the leading edge.

8. The blade as claimed in claim 1, in which the viscoelastic material is chosen from the following materials: rubber, silicone, elastomer polymer or epoxy resin.

9. The blade as claimed in claim 1, in which the protective element that protects the leading edge is made of a metal foil.

10. The blade as claimed in claim 1, in which an additional rigid plate (40) is inserted between said strip (10B) and the vane (10A) with two layers (21, 22) of viscoelastic material positioned one on each side of the plate.

11. The blade as claimed in the preceding claim, in which the layers of viscoelastic material positioned on each side of the plate are different.

12. The blade as claimed in claim 1, in which the layer of viscoelastic material has been secured to the strip and/or to the vane by hot-cementing the film of viscoelastic material.

13. The blade as claimed in claim 1, in which the layer of viscoelastic material has been secured to the strip and/or to the vane by bonding using an adhesive substance.

14. A gas turbine engine compressor comprising at least one blade as claimed in one of the preceding claims.

15. A turbojet engine comprising a fan with at least one blade as claimed in one of claims 1 to 13.

16. The turbojet engine as claimed in claim 15 in which said fan is of the unducted fan type.
